Europäisches Patentamt

(19) European Patent Office

Office européen des brevets

(11) Publication number: **0 059 883**
**B1**

(12) **EUROPEAN PATENT SPECIFICATION**

(45) Date of publication of patent specification: **04.09.85**

(21) Application number: **82101389.3**

(22) Date of filing: **24.02.82**

(51) Int. Cl.⁴: **C 08 J 5/10,** C 08 L 21/00,
C 08 K 5/09

(54) **Cured rubber skim stock compositions having improved metal adhesion and metal adhesion retention.**

(30) Priority: **09.03.81 US 242077**

(43) Date of publication of application:
**15.09.82 Bulletin 82/37**

(45) Publication of the grant of the patent:
**04.09.85 Bulletin 85/36**

(84) Designated Contracting States:
**AT BE DE FR GB IT LU SE**

(56) References cited:
**DE-A-2 363 655**
**FR-A-2 198 830**
**US-A-2 912 355**

(73) Proprietor: **THE FIRESTONE TIRE & RUBBER
COMPANY
1200 Firestone Parkway
Akron, Ohio 44317 (US)**

(72) Inventor: **Kang, Jung W.
6150 Terrace Hills Drive
Clinton Ohio 44216 (US)**
Inventor: **Davis, James A.
10688 Mogadore Road
Uniontown Ohio 44685 (US)**

(74) Representative: **Kraus, Walter, Dr. et al
Patentanwälte Kraus Weisert & Partner Thomas-
Wimmer-Ring 15
D-8000 München 22 (DE)**

The file contains technical information
submitted after the application was filed and
not included in this specification

**0 059 883**

**Description**

The present invention is directed toward cured rubber skim stock compositions having improved metal adhesion and metal adhesion retention properties and tires having metallic reinforcing elements embedded in vulcanized rubber skim stock.

Thus the present invention deals with the improvement in the adhesion and adhesion retention between a rubber skim stock composition, used in the manufacture of tires, conveyor belts, hoses and the like, and metallic reinforcement cord such as steel wire and cable which commonly carries a protective coating of zinc or brass. Improved adhesion and adhesion retention result when a metal complex of a dibasic acid is present in the rubber skim stock composition.

In the manufacture of the foregoing rubber articles, particularly steel-belted bias and radial tires, it has become common to reinforce the rubber skim stock material with steel wire or cable. The metallic reinforced rubber is employed as a belt, one or more of which is circumferentially oriented beneath the tread stock to maintain the integrity and shape of the tire during inflation and subsequent load. In order for the belt to function effectively, it is imperative that adhesion between the rubber and the steel cord be effectively maintained. Because steel is prone to oxidation, which even in minor degree is highly deleterious to the necessary adhesion with the rubber skim stock, and it would be most impractical to incorporate a chemically clean, oxidation-free steel cord in the belt at the time of its manufacture, the steel cord is plated with zinc or brass thereby protecting it from oxidation until it can be used.

While adhesion between zinc or brass-plated steel cord and rubber is generally far greater than that between the latter and oxidized steel, existing data determined from article life as well as modern testing techniques indicates that adhesion obtained between plated steel cord and the elastomer must be increased for improved article life and service. Adhesion must also be improved between the rubber skim stock and bright steel, *i.e.,* surfaces of the cord which are neither plated nor oxidized, generally occurring when the steel cords and rubber skim stock are cut to size from larger, calendered sheets of the reinforced rubber stock.

In order to promote adhesion between rubber and ferrous metals it is known to employ a variety of metallic salts as coatings to the metal or as an ingredient in a rubber composition. One early patent embodying the former technique is US—A—1 919 718 which discloses a composite rubber product that adheres to ferrous metals. The invention requires the coating of the metal with a metallic salt such as that formed with copper, cobalt, manganese, iron or lead and a fatty acid of high molecular weight, *e.g.,* stearic, palmitic, oleic, linoleic, lauric and the like. Alternatively, the metallic salt may be dissolved in a solvent or in a rubber cement which is then applied to the metal surface. The rubber layer is then applied and vulcanized in position.

US—A—2 643 273 discloses a rubber adhesive composition which contains a water soluble cobalt salt to increase the adherence of rubber to metal. The specification discloses incorporating cobalt chloride or sulfate in the rubber or dipping the metal in a solution of the salt.

US—A—2 912 355 is directed toward improving the adhesion between rubber and metal by the incorporation into a rubber composition of a partially oxidized metal salt of an aliphatic fatty acid compound, the metal being cobalt, copper, iron, lead, mercury, nickel or silver.

US—A—3 897 583 is directed toward the adhesion of metal to rubber by incorporating a cobalt salt in a rubber stock which contains an adhesive resin forming system based on a methylene donor which is a methylolated nitroalkane in combination with a resorcinol type methylene acceptor. Cobalt salts disclosed include those of aliphatic or alicyclic carboxylic acids having 6—30 carbon atoms.

US—A—3 903 026 discloses a rubber composition containing cobalt carboxylate and magnesium oxide to improve the adhesion of the rubber to zinc or zinc alloy plated steel.

US—A—3 936 536 discloses the method of adhering rubber to metal by coating the metal with rubber containing a small amount of $Co(NH_3)_2 \cdot Cl_2$.

US—A—3 993 847 discloses a process of bonding a rubber to a ferrous metal and such a laminated article. Adhesion is improved by employing an adhesive comprising a conjugated diene and a heterocyclic nitrogen base and containing about 5—180 parts of silica filler per 100 parts of the diene-heterocyclic nitrogen interpolymer. The patent states that adhesion is further improved by using a rubber containing small amounts of cobalt metal.

The object of the present invention is to enhance the adhesion between rubber compositions and metals by employing specific metallic salts.

This object is achieved by the present invention.

Thus the present invention is directed to cured rubber skim stock compositions having improved metal adhesion and metal adhesion retention properties, said compositions having been obtained by curing:
100 parts of a vulcanizable rubber stock; and
from 0.50 to 10.0 parts by weight of cobalt
adipate or cobalt azelate
per 100 parts of the rubber component in said rubber stock.

The present invention is also directed to a tire having metallic reinforcing elements embedded in vulcanized rubber skim stock, said skim stock being characterized by having incorporated therein:

2

from 0.50 to 10.0 parts by weight of cobalt adipate or cobalt azelate per 100 parts of the rubber component in said rubber skim stock.

To illustrate the invention, a typical rubber skim stock is presented hereinbelow which is suitable for preparation of rubber articles such as tires. Adhesion between this stock with steel reinforcement subsequent to vulcanization has been measured and is also presented hereinbelow. It is to be understood that the composition of the rubber skim stock provided is not part of the present invention and that it has been presented solely to enable those skilled in the art to have at least one rubber skim stock with which to practice the invention.

The ingredients utilized in the practice of the present invention are cobalt adipate and cobalt azelate both of which are prepared from the corresponding acid, i.e. adipic or azelaic acid, and cobalt hydroxide. Cobalt adipate, as used in the experimental work discussed hereinbelow, is a purple powder having about 28.5% cobalt and a specific gravity in kerosene of 3.928±0.5 at 25°C. Cobalt azelate, as used in the experimental work discussed hereinbelow, is a purple powder having about 22% cobalt.

Amounts of the cobalt salt employed range from 0.50 to 10.0 parts per hundred parts of rubber (phr) with 1.35 phr being preferred.

In order to determine the improvement in adhesion obtained when the cobalt salts are added to the rubber skim stock, T-adhesion tests (rubber-to-steel cord) were conducted according to the procedure which follows.

The test utilized T-adhesion pads prepared by placing 1.5 mm slabs of uncured fully compounded rubber skim stock on 1.3 mm fabric reinforced rubber backing. Commercial brass-coated cables (1×5×0.25 mm diam.) were placed between two pads of the reinforced skim stock with the wires in contact with the uncured rubber skim at 1.25 cm intervals. The width of each adhesion pad was 1.25 cm. The pads were placed in a curing mold and were cured for 30 minutes at 149°C. Testing was done on a Model 1130 Instron Universal Tester at a crosshead speed of 25.4 cm per minute and 110°C. The T-adhesion pads were preheated in the 110°C oven for 20 minutes prior to testing. Oven aging of the cured T-adhesion pads was done in a forced air oven at 121°C for two days. Steam bomb aging of the cured samples was done in a pressure tight bomb for one hour at 149°C, in a saturated steam atmosphere.

Detailed T-adhesion test procedure

1. Using a Clicker machine and a 15.24×1.25 cm die, prepare an adequate number of calendered and control stock samples of T-adhesion pad building.
2. Use one piece of calendered fabric reinforced rubber backing (0.1295 cm).
3. Ply one piece of 1.5 mm control rubber stock (0.1524 cm) onto the fabric backing.
4. Place sample in building jig with fabric side down.
5. Place ten cords (of brass or zinc coated wire) approximately 17.78 cm in length equally spaced on top of the two piece assembly.
6. Invert another 2 ply assembly, made as in items 1, 2 and 3, on top of cords so that cords are between the two layers of rubber skim stock to be tested.
7. This assembly should now fit snugly into the cavity of the curing mold.
8. Adhesion pads shall be cured for 30 minutes at 149°C and then allowed to equilibrate for 24 hours before testing.
9. Testing Machine: Model 1130 Instron Universal Tester.
10. Test speed 25.4 cm/minute; testing temperature, 110°C after 20 minutes preheat.
11. The top grip shall be of a special holder made for the cured sample, with a slot in the bottom to permit the sample to be inserted with the wires protruding. The bottom grip should be a wedge type, designed to exert increasing tightening as each wire is pulled from the cured sample.
12. Record 10 wire pull-outs and average. Multiply average pull-out force value by 8.93 to obtain Newtons.

In the tests which follow, a rubber skim stock, Stock A, was prpared to which the ingredients of the present invention were added in varying amounts. Formulations for each are as follows with all parts given on the basis of parts per hundred parts of rubber (phr) by weight, unless otherwise specified.

# 0 059 883

| Compounding ingredients | Stock A |
|---|---|
| Natural rubber | 100 |
| HAF Carbon black | 60 |
| Zinc oxide | 7.5 |
| Stearic acid | 0.5 |
| Hydrocarbon resins | 2.0 |
| Santoflex DD® *1 | 2.0 |
| NOBS Special® *2 | 0.8 |
| Santoflex 13® *3 | 1.0 |
| Process oil | 2.0 |
| Sulfur MB® *4 | 7.5 |
| Santogard PVI® *5 | 0.4 |

*1 6-dodecyl-1,2-dihydro-2,2,4-trimethylquinoline
*2 N-oxydiethylene benzothiazole 2-sulfenamide
*3 N-(1,3 dimethylbutyl)-N'-phenyl-p-phenylenediamine
*4 80% Insoluble sulfur and 20% process oil preblend
*5 N-(cyclohexylthio)phthalimide.

In the first series of tests which follow, cobalt adipate and cobalt azelate were added to Stock A in amounts of 1.35 and 1.75 phr, respectively. Rubber skim stocks containing cobalt adipate and cobalt azelate appear as Examples 3 and 4, respectively. For purposes of comparison, both complexes were evaluated against two other compositions, Examples 1 and 2, both of the latter consisting of Stock A, and a different cobalt additive known to improve rubber-to-metal adhesion and adhesion retention. All cobalt additives studied were individually incorporated into Stock A to give a concentration of 0.2 percent cobalt metal, based upon the total weight of the rubber skim stock. Example 1 contained 2.40 phr of a cobalt complex, Mooney Cobalt 401, a dark purple viscous liquid comprising about 15.5 to 16.5 percent cobalt. It has a viscosity (at 25°C) of 1000 to 9000 mPa . s, a specific gravity of 1.10 to 1.20 and, an ash content of from 23 to 28 weight percent. Mooney Cobalt 401 is commercially available from Mooney Chemical, Inc., Cleveland, Ohio. Example 2 contained 2.40 phr of Manobond C-16 which is a commercially available source of a cobalt and boron containing additive having from 9 to 12 carbons. Manobond C-16 is available as a dark purple, viscous liquid; it contains 15.5 to 16.5 percent cobalt; it has a viscosity (at 25°C) of 3,000 to 9,000 mPa . s and an ash content from 22 to 25 weight percent. Manobond C-16 is commercially available from Wyrough and Loser, Inc., Trenton, New Jersey. A control was also provided consisting of Stock A alone without any adhesion promoting additives.

Three sets of tests were conducted with the Control (containing no cobalt additives) and Examples 1—4 and these are reported in Table I. The tests included T-adhesion determination for vulcanized specimens—unaged or unconditioned, Test A; oven aged, Test B; and, steam bomb aged, Test C. The force necessary to pull or remove the metallic reinforcement from the vulcanized rubber skim stock is given first, in Newton, followed by the percent of rubber skim stock remaining on the surface of the metallic reinforcement. The amount of rubber skim stock remaining on the metallic reinforcement was determined by visual examination and has been reported as % rubber coverage.

4

# 0 059 883

TABLE I

Short term wire adhesion data comparing two commercially available cobalt additives
and two dicarboxylic acid complexes of cobalt

|  | Control | Ex. 1 | Ex. 2 | Ex. 3 | Ex. 4 |
|---|---|---|---|---|---|
| Mooney Cobalt 401, phr | — | 2.40 | — | — | — |
| Manobond C-16, phr | — | — | 2.40 | — | — |
| Cobalt adipate, phr | — | — | — | 1.35 | — |
| Cobalt azelate, phr | — | — | — | — | 1.75 |
| **Test A** | | | | | |
| Unaged or unconditioned Plated steel cord[a] | | | | | |
| Brass-plated Newton | 643 | 679 | 625 | 710 | 665 |
| % Rubber coverage | 95—100 | 95—100 | 95—100 | 100 | 95—100 |
| Zinc-plated Newton | 125 | 571 | 473 | 558 | 589 |
| % Rubber coverage | 0 | 90 | 85 | 90—95 | 85—90 |
| **Test B** | | | | | |
| Oven aged plated steel cord[b] | | | | | |
| Brass-plated Newton | 456 | 465 | 453 | 451 | 590 |
| % Rubber coverage | 90 | 95 | 90—95 | 95—100 | 90 |
| Zinc-plated Newton | 44.8 | 565 | 457 | 433 | 366 |
| % Rubber coverage | 0 | 75—80 | 70 | 80 | 80 |
| **Test C** | | | | | |
| Steam bomb aged plated Steel cord[c] | | | | | |
| Brass-plated Newton | 398 | 464 | 429 | 494 | 576 |
| % Rubber coverage | 85 | 65—70 | 70 | 85 | 95—100 |
| Zinc-plated Newton | — | 537 | 513 | 435 | 558 |
| % Rubber coverage | — | 80 | 90 | 85—90 | 65 |

[a] T-adhesion pads cured 30 minutes at 149°C and tested at 110°C.

[b] T-adhesion pads cured 30 minutes at 149°C, heat aged in a forced air oven for 2 days at 121°C and tested at 110°C.

[c] T-adhesion pads cured 30 minutes at 149°C, steam bomb aged 1 hour at 149°C and tested at 110°C.

As can be determined from Table I, Test A, unaged adhesion of the control stock to brass-plated steel cord was significantly better than to zinc-plated steel cord. The addition of the cobalt salts of the present invention (Examples 3 and 4) provided adhesion properties as good as or slightly better than reported for Examples 1 and 2 with both brass-plated cord and the zinc-plated steel cord.

In Test B, oven aging, adhesion of the stocks with the brass-plated wire was again comparable to the adhesion with the brass-plated wire with the cobalt complexes of the present invention, whereas with the zinc-plated wire properties were slightly lower. Of course, for the Control, adhesion with the brass-plated wire was significantly better than with the zinc-plated wire. The oven aging test is an accelerated heat aging test and is significant in determining the effect of heat on the thermal stability of the chemical bonds formed between the rubber skim stock and the metallic reinforcement during vulcanization.

5

**0 059 883**

In Test C, steam bomb aging, adhesion of the stocks of Examples 3 and 4 with brass-plated wire and zinc-plated wire was as good as and slightly better than the adhesion reported for Examples 1 and 2. Steam bomb aging for one hour at 149°C is an accelerated humidity aging test and is significant in determining the chemical stability of the chemical bonds formed between the rubber skim stock and the metallic reinforcement when exposed to moisture or steam under pressure.

In the second series of tests, reported in Table II, the effect of long term humidity chamber aging is presented for periods of time of 0—90 days between the Control, Stock A and Examples 1—3, with brass-plated steel cord and with zinc-plated steel cord. Ninety day long term humidity chamber aging data was not determined for zinc-plated steel cord. In addition to adhesion pull out force values, and percent rubber coverage values, also reported are precent adhesion retention values. Percent retention is a determination of metal adhesion retention and is defined as follows:

$$\text{Percent retention} = \frac{\text{Adhesion pull-out force of aged specimen}}{\text{Adhesion pull-out force of unaged specimen}} \times 100$$

TABLE II
Long term humidity aging wire adhesion data comprising two
commercially available cobalt salts

|  | Control | Ex. 1 | Ex. 2 | Ex. 3 |
|---|---|---|---|---|
| Mooney cobalt 401, phr | — | 2.40 | — | — |
| Manobond C-16, phr | — | — | 2.40 | — |
| Cobalt adipate, phr | — | — | — | 1.35 |
| Test D | | | | |
| 0 Day humidity chamber test | | | | |
| Brass-plated steel cord[d] | | | | |
| Newton | 689 | 678 | 625 | 719 |
| % Rubber coverage | 95 | 95—100 | 95—100 | 95 |
| Zinc-plated steel cord[d] | | | | |
| Newton | 53.5 | 572 | 473 | 612 |
| % Rubber coverage | 0 | 90 | 85 | 95 |
| Test E | | | | |
| 30 Day humidity chamber test | | | | |
| Brass-plated steel cord[d] | | | | |
| Newton | 607 | 643 | 581 | 764 |
| % Rubber coverage | 90 | 100 | 100 | 95—100 |
| % Retention | 88.2 | 94.7 | 92.9 | 106.2 |
| Zinc-plated steel cord[d] | | | | |
| Newton | — | 402 | 353 | 612 |
| % Rubber coverage | — | 55—60 | 25—30 | 95 |
| % Retention | — | 70.3 | 74.5 | 100.1 |

6

TABLE II (Cont'd)

| | Control | Ex. 1 | Ex. 2 | Ex. 3 |
|---|---|---|---|---|
| **Test F** | | | | |
| 60 Day humidity chamber test | | | | |
| Brass-plated steel cord[d] | | | | |
| Newton | 514 | 492 | 423 | 661 |
| % Rubber coverage | 65 | 90 | 85—90 | 90 |
| % Retention | 74.6 | 72.5 | 67.6 | 91.9 |
| Zinc-plated steel cord[d] | | | | |
| Newton | — | 219 | 197 | 585 |
| % Rubber coverage | — | 0 | 0 | 90 |
| % Retention | — | 38.3 | 41.5 | 95.6 |
| **Test G** | | | | |
| 90 Day humidity chamber test | | | | |
| Brass-plated steel cord[d] | | | | |
| Newton | 456 | 398 | 344 | 654 |
| % Rubber coverage | 60 | 60—65 | 55 | 90 |
| % Retention | 66.2 | 58.6 | 55.0 | 91.0 |

[d] T-adhesion pads cured 30 minutes at 149°C, aged in humidity chamber at 90% relative humidity and 35°C and tested at 110°C.

Tests D through G, representing the effect of humidity chamber aging, show that the control Stock A gradually lost adhesion properties with aging. The effect of humidity aging on Examples 1 and 2 indicated a loss of adhesion, comparable to that observed with the Control although, unlike the latter, the percent rubber coverage remaining on the metallic reinforcement was improved. Percent retention, i.e., metal adhesion retention discussed hereinabove, decreased with the Control and Examples 1 and 2. Addition of cobalt adipate to Stock A (Example 3) greatly improved the adhesion of the cured stock to brass-plated steel cord and it can be noted that the percent rubber coverage and adhesion retention values after 90 days of aging was still 90 and 91.0 percent, respectively. With respect to adhesion, percent rubber coverage and adhesion retention of the various stocks to zinc-plated steel cord, all values were significantly higher for Example 3 than Examples 1 or 2 and particularly the Control which was not even tested after the 0 day evaluation. Generally speaking, adhesion of cured skim stocks to brass-plated steel cord is more successful than to zinc-plated steel cord and therefore the values reported for Example 3 are unexpectedly good.

Significance of the humidity chamber tests is again in determining the chemical stability of chemical bonds formed between the rubber skim stock and the metallic reinforcement when exposed to conditions of high relative humidity and high temperature, as compared to ambient, and extended periods of time.

Based on the foregoing results reported in Tables I to II, we consider the presence of cobalt salts in a rubber skim stock to be effective in promoting adhesion between the rubber skim stock and metallic reinforcement. As demonstrated hereinabove, the test wire used to practice our invention with dicarboxylic salts of cobalt can be, for example, brass-plated wire, i.e., 70% Cu, 30% Zn; zinc-plated or bright steel. The wire can be in the form of a strand, mat, web, ply or braid. For the nickel complexes, adhesion properties are good with brass-plated steel.

The present invention also finds utility in, for example, brassed metal-rubber articles such as motor mounts, cutless bearings, torsilastic springs, power belts, printing rolls, metal wire reinforced or braided hose, electrical deicers, shoe heels and wherever it is desired to secure rubber to metal or provide a flexible and strong, thermally stable bond between the same.

**Claims**

1. Cured rubber skim stock compositions having improved metal adhesion and metal adhesion retention properties, said compositions having been obtained by curing:
100 parts of a vulcanizable rubber stock; and
from 0.50 to 10.0 parts by weight of cobalt adipate or cobalt azelate per 100 parts of the rubber component in said rubber stock.

7

2. Cured rubber skim stock compositions, as set forth in claim 1, wherein said metal is present in a metallic reinforcing cord selected from the group consisting of steel cord, brass-plated steel cord and zinc-plated steel cord.

3. Cured rubber skim stock compositions, as set forth in claim 2, wherein said metal is present in a metallic reinforcing cord comprising brass-plated steel cord.

4. A tire having metallic reinforcing elements embedded in vulcanized rubber skim stock, said skim stock being characterized by having incorporated therein:

from 0.50 to 10.0 parts by weight of cobalt adipate or cobalt azelate per 100 parts of the rubber component in said rubber skim stock.

5. A tire, as set forth in claim 4, wherein the metallic reinforcing elements are selected from the group consisting of steel cord, brass-plated steel cord and zinc-plated steel cord.

6. A tire, as set forth in claim 5, wherein the metallic reinforcing elements comprise brass-plated steel cord.

**Patentansprüche**

1. Zusammensetzungen aus vulkanisiertem Skim-Kautschuk-Material mit verbesserter und dauerhafter Haftung an Metall, dadurch gekennzeichnet, daß die genannten Zusammensetzungen dadurch erhalten worden sind, daß 100 Teile einer vulkanisierbaren Kautschukmischung und 0,50 bis 10,0 Gew.-Teile Kobaltadipat oder Kobaltazelat pro 100 Teile der Kautschukkomponente in der genannten Kautschukmischung vulkanisiert worden sind.

2. Zusammensetzung aus vulkanisiertem Skim-Kautschuk-Material nach Anspruch 1, dadurch gekennzeichnet, daß das genannte Metall in einem metallischen Verstärkungscord vorhanden ist, der aus der Gruppe Stahlcord, messingplattierter Stahlcord und zinkplattierter Stahlcord ausgewählt ist.

3. Zusammensetzung aus vulkanisiertem Skim-Kautschuk-Material nach Anspruch 2, dadurch gekennzeichnet, daß das genannte Metall in einem metallischen Verstärkungscord vorhanden ist, der messingplattierter Stahlcord ist.

4. Reifen mit metallischen Verstärkungselementen, die in ein vulkanisiertes Skim-Kautschuk-Material eingebettet ist, dadurch gekennzeichnet, daß in das genannte Skim-Material 0,50 bis 10,0 Gew.-Teile Kobaltadipat oder Kobaltazelat pro 100 Teile der Kautschukkomponente in dem genannten Kautschuk-Skim-Material eingearbeitet worden sind.

5. Reifen nach Anspruch 4, dadurch gekennzeichnet, daß die metallischen Verstärkungselemente aus der Gruppe Stahlcord messingplattierter Stahlcord und zinkplattierter Stahlcord ausgewählt sind.

6. Reifen nach Anspruch 5, dadurch gekennzeichnet, daß die metallischen Verstärkungselemente aus messingplattiertem Stahlcord bestehen.

**Revendications**

1. Compositions de mélange de skim de caoutchouc vulcanisé présentant des propriétés améliorées d'adhérence au métal et de conservation de l'adhérence au métal, lesdites compositions ayant été obtenues par vulcanisation de:

100 parties d'un mélange de caoutchouc vulcanisé; et de

0,50 à 10,0 parties en poids d'adipate de cobalt ou d'azélate de cobalt pour 100 parties du constituant caoutchouc dans ledit mélange de caoutchouc.

2. Compositions de mélange de skim de caoutchouc vulcanisé selon la revendication 1, dans lesquelles ledit métal est présent dans un câblé métallique de renfort choisi dans le groupe comprenant un câblé d'acier, un câblé d'acier revêtu de laiton et un câblé d'acier revêtu de zinc.

3. Compositions de mélange de skim de caoutchouc vulcanisé selon la revendication 2, dans lesquelles ledit métal est présent dans un câblé métallique de renfort comprenant un câblé d'acier revêtu de laiton.

4. Bandage comportant des éléments métalliques de renfort noyés dans un mélange de skim de caoutchouc vulcanisé, ledit mélange de skim étant caractérisé en ce qu'il contient:

de 0,50 à 10,0 parties en poids d'adipate

de cobalt ou d'azélate de cobalt pour 100 parties du constituant en caoutchouc dans ledit mélange de skim de caoutchouc.

5. Bandage selon la revendication 4, dans lequel les éléments métalliques de renfort sont choisis dans le groupe comprenant un câblé d'acier, un câblé d'acier revêtu de laiton et un câblé d'acier revêtu de zinc.

6. Bandage selon la revendication 5, dans lequel les éléments métalliques de renfort comprennent un câblé d'acier revêtu de laiton.